## Europäisches Patentamt
## European Patent Office
## Office européen des brevets

(11) Publication number: **0 232 237**
**A2**

# EUROPEAN PATENT APPLICATION

(21) Application number: **87850030.5**

(22) Date of filing: **30.01.87**

(51) Int. Cl.⁴: **B 60 N 1/12**

(30) Priority: **04.02.86 NO 860385**

(43) Date of publication of application:
**12.08.87 Bulletin 87/33**

(84) Designated Contracting States:
**AT BE CH DE FR LI NL**

(71) Applicant: **HTS Hans Torgersen & Sonn A/S**
**N-3515 Kroderen (NO)**

(72) Inventor: **Torgersen, Hans**
**N-3515 Kroderen (NO)**

(74) Representative: **Delmar, John-Ake**
**AB Delmar & Co Patentbyra Östermalmsgatan 45**
**S-114 26 Stockholm (SE)**

(54) **A child's seat for use with existing safety belts in a vehicle.**

(57) A child's seat for use with existing safety belts in a vehicle. Said child's seat may comprise a seat member and a back rest member (2) as well as a head/shoulder rest member (3). Said back rest member (2) may be releasable from said seat member, so that the seat member may be used as a cushion. Said head/shoulder rest (3) may be displaceable relative to said back rest to permit the seat to be used for children of different hight.

Fig.1.

**Description**

## A CHILD'S SEAT FOR USE WITH EXISTING SAFETY BELTS IN A VEHICLE

The present invention relates to a child's seat for use with existing safety belts in a vehicle, more precicely with a three point/two point safety belt.

The child's seat is designed to satisfy demands for safety and comfort of children aged I to 8 years when they are passengers in a car.

Generally, a child aged I to 5 years needs a child's seat with a back rest. Seats available in the market to day, however are not suited for older children, from 5 and up to I0 years old. Conventional safety belts existing in the vehicle, however, are intended for larger persons, and can hardly be used by children. It has, thus been suggested to use cushions that may be placed beneath a child. But this means that it will be necessary to make another purchase when a child has grown out of the seat and needs a cushion. The known cushions of this kind, besides, did not proove especially suitable when used with existing safety belts in the vehicle.

It is, thus, an object of the present invention to provide a child's seat which may be combined and used until the child is big enough not to require auxiliary equipment to be able to use commonly existing safety belts in a vehicle.

This object is achieved by the aid of the present invention in a seat of the kind as stated in the introductory part of claim I, that is characterized as stated in the characterizing part of claim I.

Further features of the invention will appear from the dependent claims.

For children aged I to 5 years, the seat portion is, thus, used with a firmly mounted back rest. The head/shoulder rest, however,may be moved upwards with the child's increasing body height. The oblique portion of the safety belt extends below the head/shoulder rest, so that, in a possible moment of collision the safety belt will always be tensioned across the collar bone and obliquely/vertically across the upper part of the body without injuring the neck area. The seat portion is locked against movement forward by the safety belt, the stomach/leg portion of which is forcibly guided in said recesses in the arm rests of the seat.

When the child reaches an age of 5 years, it will attain such a level by the aid of the cushion that it may use an ordinary three point safety belt without said head/shoulder rest in order to avoid that the belt is tensioned across its neck in case of a crash. The back rest may, thus, be removed and a more comfortable position is achieved. Such a cushion may be used until the child is 8 to I0 years old.

By the present invention a seat device is, thus, provided which by combining various removable and partly adjustable parts may be used for a child from an age of I year until the child is 8 to I0 years old.

The invention is now disclosed in more detail with reference to the drawings, where

Figure I shows a seat with a back rest and a head/shoulder rest in perspective in a back and side view, and

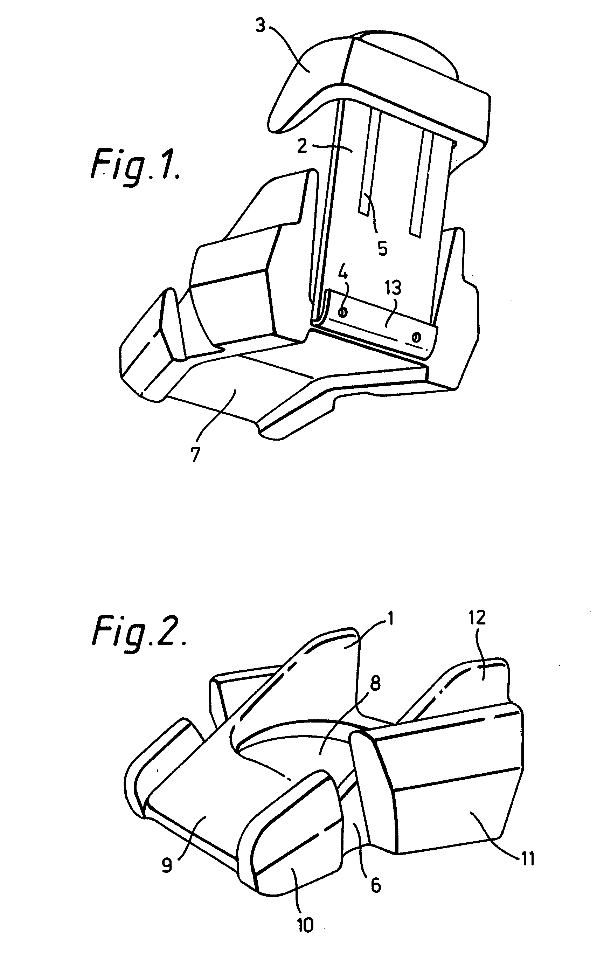

Figure 2 shows the seat cushion in perspective, partly from one side, and partly from above.

Below, the different parts of the seat are described individually. Seat member I comprises a bottom surface 7 facing down towards the car seat and being slightly angular to conform to the seat of the car and prevent the seat cusion from tilting. This means that the front and back end of the child's seat will always have surfaces in contact with the car seat. Seat cushion I has a build up 8 of the seat surface so that the child will sit at a higher level. Towards front edge 9 the seat surface is inclined downwards to make the front edge of the seat terminate adjacent the front edge of the car seat.

Front portion I0 of the side rests serve to support the legs/calfs of the child. Side rest I0 is separated from the rear portion of side rest II with a recess 6 for receiving the stomach portion of the safety belt. The seat I itself is shaped with an upward projecting side portion I2 serving as a side support for the child's hips and to prop up the upper body of the child. Said side portion I2 has a shape that permits it to conform with the front portion of the chair and to support the thigh and calf with support member I0.

Side portion II is also intended to be an arm rest. Recess 6 is made for the safety belt, as mentioned above. When said child's seat I is placed on the right side of the car, the three point belt goes down on the left side and continues as a stomach belt across to the other side. When the child's seat is placed on the left side, three point belt goes down on the right side and continues as a stomach belt to the left side. The belt in question is, obviously, a safety belt already mounted in the vehicle.

The seat member is provided with a moulded holding means I3 for the back rest 2, which can be mounted/removed separately so that said child's seat may be used both as a seat cushion only, or as a child's seat with a back rest. A seat cover may be fastened at the rear portion fo the seat and about the back rest with a rubber band. Seat cover will normally only cover the seat portion and extend to the front end of the seat to be fastened below said seat with a rubber band and hooks. The seat cushion may consist of a soft PUR foam with an inside reinforcement, alternatively it may consist of expanded polystyrene.

The back rest, which is shown in more detail in Figure I is made of plastic, alternatively, a metal structure is covered by a textile and provided with a padded front. At the lower end of back rest 2 means of attachment for locking bolts 4 are adapted, and fastening means I3 are integrally moulded. Velcro 5 is secured horizontally. By the aid of said Velcro means said head/shoulder rest 3 is adjustable vertically as well as laterally. Obviously, it will be possible to use other fastening means than Velcro, e.g. a guide rail with bolts and screws for retaining said head/shoulder support at a desired level.

Head/shoulder rest 3 has three objects:

I. To act as a lateral support for the head/neck when the child is asleep or resting. Said lateral support, however, will also have a function in case of a crash from the side or in an angular direction.

2. Head and shoulder rest 3 is always adjusted down to the child's shoulder to make the child sit in a more safe and protected position in case of a crash.

3. The safety belt is passed below said head/shoulder rest 3, so that a three point belt will always tension across the chest at a moment of collision, since head/shoulder rest 3 is already adjusted down to the shoulder.

Said head/shoulder rest 3 is shaped so as to pass all the way around the rear of back rest 2, and vertical astrakhan (for a Velcro lock) strips are fastened to said rest 3, as mentioned, e.g. permitting adjustments up and down, dependent on the shoulder level of the child.

## Claims

I. A child's seat for use with existing safety belts in vehicles, comprising a seat member (I) and a back rest member (2), **characterized in** that a head/shoulder rest member (3) is provided for releasable cooperation with said back rest member (2) and/or so as to be adjustable vertically and/or laterally in relation to said back rest member (2).

2. A seat as defined in claim I, **characterized in** that said head/shoulder rest (3) is fastened to said back rest (2) by the aid of a Velcro lock (5).

3. A seat as defined in claims I and 2, **characterized in** that the means for releasable cooperation between head/shoulder rest member (3) and back rest member (2) is composed of a guide rail with screws to hold said head/shoulder rest (3) at the desired level.

4. A seat as defined in claims I and 2, **characterized in** that said seat member (I) is provided with recesses (6) in the upper faces and side faces of the arm rests (I0, II, I2) for the stomach portion of the safety belt.

0232237

*Fig.1.*

*Fig.2.*